# EUROPEAN PATENT SPECIFICATION

(11) **EP 3 120 616 B1**
(45) Date of publication and mention of the grant of the patent: **12.08.2020**
(21) Application number: 15789222.5
(22) Date of filing: 06.05.2015
(51) Int. Cl.: H04W 48/10, H04W 88/06, H04W 8/00, H04W 48/08, H04W 48/12, H04W 72/04, H04W 84/12, H04W 88/08, H04W 48/16, H04W 4/20

(54) **METHOD FOR DISCOVERING SERVICES**
VERFAHREN ZUR ENTDECKUNG VON DIENSTEN
PROCÉDÉ DE DÉCOUVERTE DE SERVICES

(30) Priority: 06.05.2014 US 201461989060 P
(43) Date of publication of application: 25.01.2017
(73) Proprietor: MediaTek Singapore Pte. Ltd., Singapore 138628 (SG)
(72) Inventor: BAJKO, Gabor, Santa Clara, California 95054 (US); WANG, Chao-chun, Taipei City 106 (TW)
(74) Representative: Hoefer & Partner Patentanwälte mbB
(86) International application number: PCT/SG2015/050098
(87) International publication number: WO 2015/171075

(56) References cited:
- WO-A1-2013/174428
- WO-A1-2013/184110
- WO-A2-2013/045284
- US-A1- 2012 300 759
- US-A1- 2013 304 631
- US-A1- 2014 080 533
- US-A1- 2014 082 205
- US-A1- 2014 112 189
- "Wi-Fi Peer-to-Peer (P2P) Technical Specification v1.2", WI-FI PEER-TO-PEER (P2P) SPECIFICATION, WI-FI ALLIANCE, US , vol. V1.2 14 December 2011 (2011-12-14), pages 1-159, XP008165048, Retrieved from the Internet: URL:https://www.wi-fi.org/knowledge-center /published-specifications [retrieved on 2017-08-16]
- "Neighbor Awareness Networking Technical Specification", , 1 May 2015 (2015-05-01), XP055258740, Retrieved from the Internet: URL:https://www.wi-fi.org/downloads-regist ered-guest/Neighbor_Awareness_Networking_T echnical_Specification_v1_0_0.pdf/29731 [retrieved on 2016-03-16]

## Description

### CROSS REFERENCE TO RELATED APPLICATIONS

This application claims priority under 35 U.S.C. §119 from U.S. Provisional Application Number 61/989,060, entitled "Discovering services hosted by HS2.0 Rel-2 networks," filed on May 6, 2014.

### TECHNICAL FIELD

The disclosed embodiments relate generally to wireless network communications method, and, more particularly, to a method to discover services in a wireless network communications system.

### Background

Hot Spot 2.0 (HS 2.0), also called "Wi-Fi Certified Passpoint", is a standard for public-access Wi-Fi that enables seamless roaming among Wi-Fi networks and between Wi-Fi and cellular networks. HS 2.0 was developed by the Wi-Fi Alliance and the Wireless Broadband Association to enable seamless hand-off of traffic without requiring additional user sign-on and authentication.

A hotspot can be differentiated from a wireless access point, which is the hardware device used to provide the wireless network service. A hot spot (or hotspot) is a wireless local area network (WLAN) node that provides Internet connection from a given location for users of devices with wireless connectivity and might include the function of an access point. Hotspots are common in hotels, airports, libraries, and coffee shops. Normally, a user must connect manually to a hotspot by checking the wireless connection options, selecting one, and entering authentication information, usually a simple password.

The HS 2.0 specification is based on a set of protocols called IEEE 802.11u, which facilitates cellular-like roaming, increased bandwidth, and service on demand for wireless-equipped devices in general. When a subscriber's 802.11u-capable device is in range of at least one Wi-Fi network, the device can automatically select a network and connects to it. Network discovery, registration, provisioning, and access processes can be automated, so that the user does not have to go through them manually in order to connect and stay connected.

If services are available at a HS2.0 capable Hotspot, the Hotspot AP sets a capability bit indicating the presence of such services in beacon and probe responses. The services can be hosted locally, such as "location-based" services, or the Hotspot can offer access to a walled garden where the service is available.

WO2013/184110A1 discloses a method according to the preamble portion of claim 1. WO2013/174428A1 discloses a method utilizing neighbor aware networking.

### SUMMARY

It is therefore an object of the present invention to provide a method for a wireless device to provide a service. This object is achieved by the method according to the claim 1. The method comprises operating the wireless device as a hotspot in an operating channel, and advertising service information by the wireless device through an awareness channel to another wireless device.

According to an embodiment of the present invention, the awareness channel is a neighbor awareness network (NAN) channel.

It is therefore another object of the present invention to provide a method for a wireless device to discover a service. This object is achieved by the method according to the claim 7. The method comprises operating the wireless device as a hotspot enabled station in an operating channel and s a neighbor awareness network role in an awareness channel. The wireless device then receives information of the service through the awareness channel.

This application further discloses a method for discovering a service. This method does not form part of the invention but is useful for understanding the invention. The method comprises operating a first wireless device as an access point according to neighbor awareness network service discovery protocol (SDP). A second wireless device then queries to the access point in an operating channel about the service with a SDP action frame. The first wireless device then responds information of the service with a SDP action frame to the second wireless device.

### BRIEF DESCRIPTION OF THE DRAWINGS

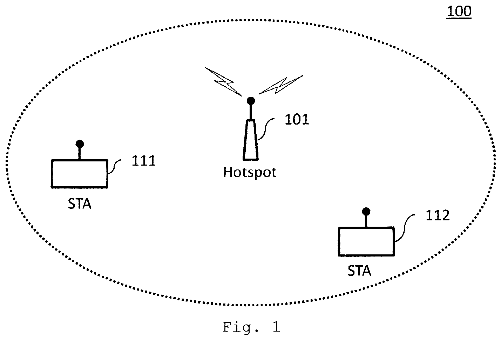

Figure 1 illustrates a wireless network communications system according to an embodiment of the present invention.

### DETAILED DESCRIPTION

The awareness technology, such as Neighbor awareness networking (NAN) or Wi-Fi Aware, is a capability of Wi-Fi which enables power-efficient discovery of nearby information and services before making a connection. The awareness technology makes it easy to find services available in the area that match preferences set by the user - and is optimized to work well even in crowded environments. The awareness technology can be a key enabler of a personalized social, local, and mobile experience, enabling users to find video gaming opponents, share media content, and access localized information all before establishing a connection. For example, since service definitions, publication of the availability of a service or query for the availability of a service are specified in the NAN program, it can be leveraged in a Hotspot.

Please refer to Fig. 1, which illustrates a wireless network communications system 100 according to an example of the present invention. A plurality of stations, for example STA 111 and STA 112, are associated with an access point (AP) 101.

According to an embodiment of the present invention, AP 101 can be a wireless device with an AP role, such as a HS 2.0 release 2 capable Hotspot. AP 101 can also have a NAN role. Or, according to an embodiment of the present invention, AP 101 can have both roles at the same time.

When AP 101 plans to advertise services available through its Hotspot service, AP 101 can use awareness technology, such as using NAN channels, to publish service information. The service information can include, but not limited to, the name of the service, characteristics of the service or connection parameters needed to connect to the service. The connection parameters can be carried in a "service-specific-info" field according to the NAN publish and subscribe methods. However, the present invention can use any method to carry the connection parameters and is not limited herein.

According to an embodiment of the present invention, when AP 101 uses NAN channels to publish service information, AP 101 can use dual/multi radios. For example, AP 101 can operate as a Hotspot in operating channel(s), and operate NAN functionality in other channels, such as channels 6 or 149.

According to another embodiment of the present invention, when AP 101 uses NAN channels to publish service information, AP 101 can use concurrent dual band. For example, AP 101 performs Hotspot operation in one 5GHz channel, and performs NAN operation in another channel, such as channel 6.

According to yet another embodiment of the present invention, when AP 101 uses NAN channels to publish service information, AP 101 can be a single band access point which switches between an operating channel and a NAN channel with the single band.

According to an embodiment, AP 101 may publish its service in the discovery window (DW) of the NAN channel. And the service information that may be carried by service_specific_info field of the Publish method may include, but not limited to, Service Set Identifier (SSID) of the Hotspot where the concierge service is available, Basic Service Set Identifier (BSSID) of the Hotspot AP where the concierge service is available, Channel of operation of the HS2.0 capable AP where the concierge service is available, Credentials usable to access the HS2.0 network (or at least access the walled garden with the concierge service), or Uniform Resource Identifier (URI) of the service.

At the station, such as the station STA 111 in Fig. 1, it can be implemented with two roles, one is a HS 2.0 Release 2 capable station, and the other one is a NAN role.

STA 111 can subscribe to concierge service as described in NAN when it finds the service it is looking for. STA 111 can switch to the channel indicated in the service information, such as the information carried in the aforementioned service_specific_info field. STA 111 can then use Access Network Query Protocol (ANQP) or guest access credentials to find the credentials it can use with the indicated BSSID. After that, STA 111 authenticates and associates with the AP 101. Then STA 111 is able to launch the browser or connect to the URI indicated in the service information.

According to an embodiment of the present invention, the URI may be the service itself (e.g. concierge, museum guide, etc), or it may contain a java script which can be downloaded to the device, or may contain additional information displayed by the browser to the user at STA 111 with instructions on what to do next to get access to the service. However, any information can be provided by the URI and is not limited to the examples given herein.

In this example, STA 111, as NAN role, learns not only about the service, but also skip the scanning steps that scanning for available services and channels, because STA 111 has all the information it needs with respect to which channel, which SSID or with what credentials STA 111 can get access to the service.

During the operation between AP 101 and STA 111, according to an embodiment of the present invention, only one channel can be exclusively used for publishing services. Or, in another embodiment, AP 101 and STA 111 can switch between Hotspot and NAN roles in one of the operating channels.

Therefore, the aforementioned embodiment provides a method to combine two features, HS 2.0 release 2 and NAN, and therefore reduces the effort to create a new specification.

According to an example useful for understanding the present invention, two wireless devices, such as AP 101 and STA 112, both implement the NAN Service Discovery Protocol (SDP). The NAN service discovery protocol is a public action frame defined in the NAN specification. Therefore, NAN synchronization or discovery beacon is not required . This example does not form part of the invention but is useful for understanding the invention.

In this example, AP 101 operates in its operating channel, and operates as an access point. Therefore, AP 101 supports the additional service discovery protocol (SDP) public action frame as specified in NAN. According to an embodiment of the present invention, STA 112 may query AP 101, which acts as the Hotspot, before or after association, in the operating channel, about the availability of services. So STA 112 needs to implement the SDP public action frame as specified in NAN. STA 112 then uses SDP action frame to query for services at AP 101, the Hotspot, using the NAN attributes applicable to SDP.

In response, AP 101 uses SDP action frame to respond to STA 121 about availability of services. The SDP action frame may comprise a service_specific_info field that contains the parameters needed to connect to the service (eg URI).

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a wireless device (101) to provide a service, comprising:
operating the wireless device (101) with an access point, AP, role, as a release 2.0 capable hotspot in an operating channel of the AP;
and operating at the same time the wireless device (101) with a neighbor awareness networking, NAN role;
wherein when the wireless device operating with the AP role plans to advertise a service available through its hotspot service, the wireless device (101) is
advertising service information through an awareness channel of the wireless device (101);
wherein the service information includes connection parameters needed for an wireless device (111) to discover the service, connect to the service and associate with the AP;
and wherein the awareness channel is a neighbor awareness network,NAN, channel, other than the operating channel.

2. The method of claim 1, wherein the step of advertising the service information is performed in a discover window of the NAN channel.

3. The method of claim 1, wherein the wireless device (101) comprises at least 2 radios, and the wireless device (101) operates as the hotspot through the operating channel in one radio and operates through the awareness channel in another radio.

4. The method of claim 1, wherein the wireless device (101) uses concurrent dual bands, and the wireless device (101) operates as the hotspot through the operating channel in one of the concurrent dual bands, and operates through the awareness channel in another one of the concurrent dual bands.

5. The method of claim 1, wherein the wireless device (101) uses a single band, and the wireless device (101) switches between the operating channel and the NAN channel with the single band.

6. The method of claim 1, wherein the service information comprises at least one of Service Set Identifier, SSID, of the Hotspot where a concierge service is available, Basic Service Set Identifier, BSSID, of the Hotspot AP where the concierge service is available, Channel of operation of a HS2.0 capable AP where the concierge service is available, Credentials usable to access the HS2.0 network or at least access the walled garden with the concierge service, and Uniform Resource Identifier, URI, of the service.

7. A method for a wireless device (111) to discover a service, comprising:
operating the wireless device (111) as a release 2.0 hotspot capable station, STA, in an operating channel of an access point, AP (101), the AP operating as a hotspot in the operating channel;
and operating at the same time the wireless device (111) as a neighbor awareness network role in an awareness channel of the access point, wherein the awareness channel is a neighbor awareness network, NAN, channel other than the operating channel;
receiving service information from the access point (101), of a service available through the hotspot, through the awareness channel of the access point (101),
wherein the service information includes connection parameters needed to connect to the service and associate with the AP,
and using the received service information to connect to the service and associate with the AP.

8. The method of claim 7, further comprising,
switching to a channel indicated in the service information.

9. The method of claim 8, further comprising,
using Access Network Query Protocol, ANQP, or guest access credentials to find a credential used for a basic service identifier, BSSID, indicated in the service information.

10. The method of claim 7, wherein the receiving step is performed without scanning.

## Patentansprüche

1. Verfahren für eine Funkvorrichtung (101), um einen Dienst bereitzustellen, umfassend:
Betreiben der Funkvorrichtung (101) in einer Zugangspunkt-, AP-, Rolle, als einen Release-2.0-fähigen Hotspot in einem Betriebskanal des APs; und
gleichzeitiges Betreiben der Funkvorrichtung (101) in einer Neighbor-Awareness-Networking-, NAN-, Rolle;
wobei, wenn die Funkvorrichtung, die in der AP-Rolle arbeitet, plant, einen Dienst, der durch seinen Hotspot-Dienst verfügbar ist, bekannt zu machen, die Funkvorrichtung (101) Dienstinformationen durch einen Awareness-Kanal der Funkvorrichtung (101) bekannt macht;
wobei die Dienstinformationen Verbindungsparameter aufweisen, die für eine Funkvorrichtung (111) notwendig sind, um den Dienst zu erkennen, sich mit dem Dienst zu verbinden und mit dem AP zu verknüpfen;
und wobei der Awareness-Kanal ein anderer Neighbor-Awareness-Network-, NAN-, Kanal als der Betriebskanal ist.

2. Verfahren gemäß Anspruch 1, wobei der Schritt des Bekanntmachens der Dienstinformationen in einem Erkennungsfenster des NAN-Kanals ausgeführt wird.

3. Verfahren gemäß Anspruch 1, wobei die Funkvorrichtung (101) mindestens 2 Funkgeräte aufweist, und die Funkvorrichtung (101) in einem Funkgerät durch den Betriebskanal als der Hotspot arbeitet und in einem anderen Funkgerät durch den Awareness-Kanal arbeitet.

4. Verfahren gemäß Anspruch 1, wobei die Funkvorrichtung (101) parallele Zweifachbänder verwendet, und die Funkvorrichtung (101) in einem der parallelen Zweifachbänder durch den Betriebskanal als der Hotspot arbeitet und in einem anderen der parallelen Zweifachbänder durch den Awareness-Kanal arbeitet.

5. Verfahren gemäß Anspruch 1, wobei die Funkvorrichtung (101) ein Einzelband verwendet, und die Funkvorrichtung (101) mit dem Einzelband zwischen dem Betriebskanal und dem NAN-Kanal umschaltet.

6. Verfahren gemäß Anspruch 1, wobei die Dienstinformationen mindestens eins umfassen von einem Dienstsatzidentifikator, SSID, des Hotspots, wo ein Concierge-Service verfügbar ist, einem Basisdienstsatzidentifikator, BSSID, des Hotspot-APs, wo der Concierge-Service verfügbar ist, einem Kanal eines Betriebs eines HS2.0-fähigen APs, wo der Concierge-Service verfügbar ist, Berechtigungsnachweisen, die verwendbar sind, um Zugang zu dem HS2.0-Netzwerk zu erhalten oder zumindest Zugang zu dem ummauerten Garten mit dem Concierge-Service zu erhalten, und einem Uniform-Resource-Identifikator, URI, des Diensts.

7. Verfahren für eine Funkvorrichtung (111), um einen Dienst zu erkennen, umfassend:
Betreiben der Funkvorrichtung (111) als eine Release-2.0-Hotspot-fähige Station, STA, in einem Betriebskanal eines Zugangspunkts, AP (101), wobei der AP als ein Hotspot in dem Betriebskanal arbeitet; und
gleichzeitiges Betreiben der Funkvorrichtung (111) in einer Neighbor-Awareness-Network-Rolle in einem Awareness-Kanal des Zugangspunkts, wobei der Awareness-Kanal ein anderer Neighbor-Awareness-Network-, NAN-, Kanal als der Betriebskanal ist;
Empfangen von Dienstinformationen von dem Zugangspunkt (101) eines Diensts, der durch den Hotspot verfügbar ist, durch den Awareness-Kanal des Zugangspunkts (101),
wobei die Dienstinformationen Verbindungsparameter aufweisen, die notwendig sind, um sich mit dem Dienst zu verbinden und mit dem AP zu verknüpfen,
und Verwenden der empfangenen Dienstinformationen, um sich mit dem Dienst zu verbinden und mit dem AP zu verknüpfen.

8. Verfahren gemäß Anspruch 7, weiter umfassend,
Umschalten zu einem Kanal, der in den Dienstinformationen angezeigt wird.

9. Verfahren gemäß Anspruch 8, weiter umfassend,
Verwenden eines Access-Network-Query-Protokolls, ANQP, oder von Gastzugangsberechtigungsnachweisen, um einen Berechtigungsnachweis zu finden, der für einen Basisdienstidentifikator, BSSID, verwendet wird, der in den Dienstinformationen angezeigt wird.

10. Verfahren gemäß Anspruch 7, wobei der Empfangsschritt ohne ein Scannen ausgeführt wird.

## Revendications

1. Procédé pour qu'un dispositif sans fil (101) fournisse un service, comprenant le fait :
de faire fonctionner le dispositif sans fil (101) avec un rôle de point d'accès, AP, en tant que zone d'accès sans fil compatible avec la version 2.0 dans un canal de fonctionnement de l'AP ;
et de faire fonctionner en même temps le dispositif sans fil (101) avec un rôle de réseautage sensible au voisinage, NAN ;
dans lequel lorsque le dispositif sans fil fonctionnant avec le rôle AP prévoit d'annoncer un service disponible par l'intermédiaire de son service de zone d'accès sans fil, le dispositif sans fil (101) annonce des informations de service par l'intermédiaire d'un canal de sensibilisation du dispositif sans fil (101) ;
dans lequel les informations de service comportent des paramètres de connexion nécessaires pour qu'un dispositif sans fil (111) découvre le service, se connecte au service et s'associe à l'AP ;
et dans lequel
le canal de sensibilisation est un canal de réseau sensible au voisinage, NAN, autre que le canal de fonctionnement.

2. Procédé de la revendication 1, dans lequel l'étape consistant à annoncer les informations de service est réalisée dans une fenêtre de découverte du canal NAN.

3. Procédé de la revendication 1, dans lequel le dispositif sans fil (101) comprend au moins 2 radios, et le dispositif sans fil (101) fonctionne comme étant la zone d'accès sans fil à travers le canal de fonctionnement dans une radio et fonctionne à travers le canal de sensibilisation dans une autre radio.

4. Procédé de la revendication 1, dans lequel le dispositif sans fil (101) utilise des bandes doubles simultanées, et le dispositif sans fil (101) fonctionne comme étant la zone d'accès sans fil à travers le canal de fonctionnement dans l'une des bandes doubles simultanées, et fonctionne à travers le canal de sensibilisation dans une autre bande des bandes doubles simultanées.

5. Procédé de la revendication 1, dans lequel le dispositif sans fil (101) utilise une bande unique, et le dispositif sans fil (101) commute entre le canal de fonctionnement et le canal NAN avec la bande unique.

6. Procédé de la revendication 1, dans lequel les informations de service comprennent au moins un élément parmi un Identifiant d'Ensemble de Services, SSID, de la zone d'accès sans fil où un service de concierge est disponible, un Identifiant d'Ensemble de Services de Base, BSSID, de l'AP de zone d'accès sans fil où le service de concierge est disponible, un Canal de Fonctionnement d'un AP compatible avec HS2.0 où le service de concierge est disponible, des Justificatifs d'Identité utilisables pour accéder au réseau HS2.0 ou au moins accéder au jardin clos avec le service de concierge, et un Identifiant de Ressource Uniforme, URI, du service.

7. Procédé pour qu'un dispositif sans fil (111) découvre un service, comprenant le fait :
de faire fonctionner le dispositif sans fil (111) en tant que station, STA, compatible avec la zone d'accès sans fil version 2.0 dans un canal de fonctionnement d'un point d'accès, AP (101), l'AP fonctionnant en tant que zone d'accès sans fil dans le canal de fonctionnement ;
et de faire fonctionner en même temps le dispositif sans fil (111) en tant que rôle de réseau sensible au voisinage dans un canal de sensibilisation du point d'accès, dans lequel le canal de sensibilisation est un canal de réseau sensible au voisinage, NAN, autre que le canal de fonctionnement ;
de recevoir des informations de service depuis le point d'accès (101), d'un service disponible sur la zone d'accès sans fil, à travers le canal de sensibilisation du point d'accès (101),
dans lequel les informations de service comportent des paramètres de connexion nécessaires pour se connecter au service et s'associer à l'AP,
et d'utiliser les informations de service reçues pour se connecter au service et s'associer à l'AP.

8. Procédé de la revendication 7, comprenant en outre le fait,
de commuter vers un canal indiqué dans les informations de service.

9. Procédé de la revendication 8, comprenant en outre,
l'utilisation de justificatifs d'identité d'accès invité ou de Protocole d'Interrogation de Réseau d'Accès, ANQP, pour trouver un justificatif d'identité utilisé pour un identifiant de services de base, BSSID, indiqué dans les informations de service.

10. Procédé de la revendication 7, dans lequel l'étape de réception est réalisée sans balayage.
